# EUROPÄISCHE PATENTSCHRIFT

(11) **EP 3 246 832 B1**
(45) Veröffentlichungstag und Bekanntmachung des Hinweises auf die Patenterteilung: **14.08.2019**
(21) Anmeldenummer: 17170688.0
(22) Anmeldetag: 11.05.2017
(51) Int. Cl.: G06F 17/50, G06F 21/12

(54) **VERFAHREN ZUM SCHUTZ EINES FPGAS VOR EINER UNAUTORISIERTEN ANWENDUNG DES RTL-QUELLCODES**
METHOD FOR PROTECTING AN FPGA AGAINST AN UNAUTHORIZED USE OF THE RTL SOURCE CODE
PROCÉDÉ DE PROTECTION D'UN FPGA CONTRE UNE UTILISATION NON AUTORISÉE DU CODE SOURCE RTL

(30) Priorität: 19.05.2016 DE 102016208615
(43) Veröffentlichungstag der Anmeldung: 22.11.2017
(73) Patentinhaber: Siemens Aktiengesellschaft, 80333 München (DE)
(72) Erfinder: Hinterstoisser, Thomas, 2102 Bisamberg (AT); Matschnig, Martin, 3430 Tulln (AT); Taucher, Herbert, 2340 Mödling (AT)
(74) Vertreter: Maier, Daniel Oliver

(56) Entgegenhaltungen:
- US-A1- 2005 097 497
- US-A1- 2011 113 392
- US-A1- 2014 103 985
- US-B1- 7 454 323

## Beschreibung

### Technisches Gebiet

Die Erfindung bezieht sich auf ein Verfahren zum Schutz eines FPGAs vor einer unautorisierten Anwendung des RTL-Quellcodes, wobei das FPGA aus vielen Logikelementen besteht, die über ein Gitter miteinander verbindbar sind, wobei ein Logikelement jeweils eine Logikschaltung und ein Register enthält, wobei durch ein Synthesewerkzeug aus dem RTL-Quellcode die Konfigurationsdaten erzeugt werden, welche beim Einschalten der Versorgungsspannung des FPGAs in die Logikschaltungen und die Register geladen werden. Weiterhin umfasst die Erfindung ein entsprechendes Computerprogrammprodukt sowie ein entsprechendes FPGA.

### Stand der Technik

Ein sogenanntes Field Programmable Gate Array (kurz FPGA) ist ein integrierter Schaltkreis der Digitaltechnik, in den eine logische Schaltung programmiert werden kann. Anders als bei der Programmierung von Computern oder Steuerungen bezieht sich hier das Programmieren nur in zweiter Linie auf die Vorgabe zeitlicher Abläufe im Baustein, sondern vor allem auf die Definition von dessen Funktionsstruktur. Durch die Programmierung der Verschaltung der vorgegebenen Elemente wird die Funktionsweise einzelner Logikelemente (Blöcke) im FPGA und deren Verschaltung untereinander festgelegt. Man spricht daher auch von der Konfiguration eines FPGA.

Die wesensbestimmende Grundstruktur eines FPGA ist ein Feld (engl. Array) aus Logikelementen (Basisblöcken) mit jeweils einer einfachen programmierbaren Logikschaltung und einem 1-Bit-Register. Die Logikschaltung ist entweder eine Verknüpfung verschiedener Logikgatter, die über elektronische Schalter entsprechend der vom Entwickler gewünschten Funktion miteinander verknüpft werden können, oder es handelt sich um sogenannte Lookup-Tabellen (LUTs, Look-Up-Table), mit denen die Logikfunktion explizit realisiert wird. Das 1-Bit-Register ist meist als Flipflop ausgeführt.

Die LUTs können, je nach Anzahl der verfügbaren Eingänge, jede beliebige n-stellige Binärfunktion realisieren. Die Programmierung der gewünschten Funktion erfolgt durch die Hinterlegung der definierenden Wahrheitstabelle in den SRAM-Zellen der LUT, die Funktionsberechnung durch das Auslesen der durch die Eingänge bestimmten Speicheradresse. Lange Zeit waren LUT-Strukturen mit 4 binären Eingängen üblich. Neuere FPGAs gehen zur Verringerung des Aufwandes an LUT-zu-LUT-Verbindungen zur Realisierung von Funktionen mit mehr Eingängen auf LUTs mit bis zu 6 Eingängen über. Eine LUT kann eine beliebige kombinatorische Funktion (NAND, XOR, AND, Multiplexer etc.) aus den Eingangssignalen realisieren.

Die Register, also meist Flipflops, dienen dazu, Signalwerte zwischenzuspeichern, um sie im nächsten Takt weiterverarbeiten zu können. Das Verhältnis zwischen der Anzahl der Logikschaltungen, wie LUTs, und der Anzahl der Register ist meist 1:1. Aktuelle FPGAs bestehen aus bis zu einigen zehntausend Logikelementen.

Neben den LUTs ist auf dem FPGA auch die Verschaltung der Komponenten in großen Freiheitsgraden konfigurierbar. Multiplexer-Strukturen in den Logikelementen ermöglichen häufig sehr schnelle lokale Signalpfade, zur Einbindung oder Umgehung des Flipflops, zur Rückkopplung von dessen Ausgang, zur Verbindung von Nachbarblöcken und Ähnlichem. Für die ferneren Verbindungen liegt zwischen den Logikelementen ein Gitter aus umfangreichen Busstrukturen, an das Ein- und Ausgänge angeschlossen werden können. Weitere programmierbare Schaltkomponenten in den Kreuzungspunkten des Gitters erlauben die Signalverteilung über den gesamten Chip.

Die logischen Schalter und Speicher sind in den meisten FPGAs durch SRAM-Speicherzellen realisiert, welche beim Bootprozess des FPGAs passend geladen werden. Das Laden dieser Konfigurationsdaten bzw. Verknüpfungsregeln geschieht dabei aus einem externen oder internen Speicher, in der Regel aus einem speziellen Flash-ROM-Baustein, heraus. Da die SRAM-Zellen ihren Inhalt beim Abschalten der Versorgungsspannung verlieren, muss ein SRAM-basierter FPGA bei jedem Einschalten neu konfiguriert werden. Daher benötigt ein solcher FPGA einige Millisekunden bis zu einigen Sekunden, bevor er voll betriebsbereit ist.

Durch diese Konfiguration ist es auch möglich, sogenannte Firmware Updates durchzuführen, auch wenn die Hardware, also das FPGA, bereits hergestellt und in ein Computersystem eingebettet ist. Um zu vermeiden, dass eine nicht durch den Hersteller des FPGA autorisierte Konfiguration der Hardware stattfindet, müssen die Konfigurationsdaten bzw. die entsprechende Konfigurationsdatei geschützt werden. Dies geschieht z.B. durch Verschlüsseln der Konfigurationsdatei während der Programmierungsphase und Ablegen der verschlüsselten Konfigurationsdatei im Programmspeicher, dem sogenannten program flash.

In modernen sicherheitskritischen Anwendungen stellen sogenannte Differential Power Analysis (DPA) Angriffe eine immer größere Gefahr dar. Im Prinzip wird dabei die Leistungsaufnahme eines Computersystems über eine große Anzahl von Zyklen aufgezeichnet, um daraus Rückschlüsse auf den inneren Ablauf zu ziehen. Durch diese Vorgangsweise kann z.B. der Schlüssel der Konfigurationsdatei gefunden und damit die ursprüngliche Konfigurationsdatei erhalten werden. Theoretisch ist es möglich aus der Konfigurationsdatei die Funktion der Schaltung zu rekonstruieren und daraus auf den ursprünglichen Register-Transfer-Level- oder RTL Code rückzuschließen.

Sobald ein Angreifer Zugang zum sogenannten RTL-Quellcode des FPGA bekommt, sind aber alle üblichen Schutzmechanismen wertlos, weil der Angreifer aus dem RTL-Quellcode die Konfigurationsdatei selbst erstellen kann. Die Registertransferebene (englisch Register Transfer Level, RTL) ist eine Abstraktionsebene in der Hardware-Modellierung von integrierten Schaltkreisen. Beim Entwurf auf dieser Ebene wird das System durch den Signalfluss zwischen den Registern spezifiziert. Das RTL wird in Hardwarebeschreibungssprachen, wie z.B. VHDL und Verilog, verwendet, um High-Level-Darstellungen von Schaltkreisen zu erzeugen. Von diesen lassen sich Darstellungen auf niedrigeren Ebenen und schließlich die konkrete Hardware synthetisieren. Mit Software-Tools, wie einem sogenannten Synthesewerkzeug, lässt sich die RTL-Beschreibung, also der RTL-Quellcode, in eine Netzliste übersetzen, aus der schließlich durch Placement und Routing ein physikalisches Layout erzeugt wird. Das dieser Netzliste entsprechende Bit-File ist die Konfigurationsdatei.

Aus der Schrift US 7,454,323 B1 ist ein Verfahren zum Kreieren sicherer Simulationsmodelle für vielfach einsetzbarer, vorgefertigter Funktionsblöcke eines Chipdesigns bekannt, bei welchem mittels eines so genannten Verschleierungssystems innerhalb eines Funktionsblocks eine Region für eine Verschleierung identifiziert und in diese Region eine oder mehrere Funktionen wie z.B. ein so genannte Scramble-Funktion, etc. eingefügt werden. Durch diese eingefügten Funktionen wird die Funktion des jeweiligen Funktionsblocks durch einen zeitliche, räumliche Erweiterung bzw. Ausdehnung verändert, wobei diese durch eine Logikoptimierung bzw. Synthese nicht entfernbar sind. Der Funktionsblock wird dabei derart langsam und/oder groß, dass er bzw. der entsprechende Funktionsblock nicht mehr implementierbar ist.

Weiterhin ist aus der Schrift US 2014/0103985 A1 eine digital kontrollierte Verzögerungsleitung für strukturierte ASIC-Chips bekannt. Diese Verzögerungsleitung kann verwendet werden, um Eingabe- oder Ausgabe-Signale zu verzögern.

Außerdem ist aus der Schrift US 2005/097497 A1 ist ein Verfahren zum Designen von elektronischen Schaltungen bekannt, welches drei Schritte umfasst. In diesen drei Schritten werden zunächst Subsysteme in Einheiten einer rekonfigurierbaren Logikschaltung übertragen, dann werden die Verbindungen zwischen den Einheiten auf eine Verbindungsarchitektur mit Schaltern und Registern geleitet und dann Aufgaben entsprechend der Taktzyklen gegebenfalls mit vorgebbarer Verzögerungszeit geplant. Dabei wird allerdings keine unautorisierte Anwendung verhindert.

### Darstellung der Erfindung

Es ist eine Aufgabe der vorliegenden Erfindung, ein Verfahren zum Schutz eines FPGAs vor einer unautorisierten Anwendung des RTL-Quellcodes anzugeben, durch welches Konfigurationsdaten für ein FPGA erzeugt werden, welche im FPGA nicht genutzt werden können - ohne die Funktion des FPGAs zu verändern.

Die gestellte Aufgabe wird durch ein Verfahren mit den Merkmalen des Patentanspruchs 1 dadurch gelöst, dass zumindest ein Logikelement ausgewählt wird, dass dem Synthesewerkzeug bei der Erzeugung der Konfigurationsdaten neben dem RTL-Quellcode ein Befehl, in Form einer Synthese-Bedingung (einer sogenannten Synthese-Constraint), zugeführt wird, und dass zumindest ein Signalpfad für das ausgewählte Logikelement so festgelegt wird, dass sich im Betrieb des FPGAs auf diesem Signalpfad eine Laufzeit ergibt, die länger als ein Takt des FPGA ist. Dabei wird vom besagten Befehl auch angegeben, in welchem Ausmaß eine Zeitüberschreitung zulässig ist.

Durch den erfindungsgemäßen zusätzlichen Befehl wird also nicht die Funktion des betreffenden Logikelements verändert, sondern nur die Zeit, die seine Logikschaltung zur Bewältigung seiner Aufgabe benötigt. Das Ergebnis der Logikschaltung benötigt somit länger als einen Taktzyklus, um in das Register des betreffenden Logikelements zu gelangen. Anders gesagt, das Register des betreffenden Logikelements rechnet nicht damit, das Ergebnis der Logikschaltung innerhalb eines Takts zu erhalten.

Würde sich jemand unautorisiert Zugang zum RTL-Quellcode des FPGAs verschaffen und aus diesem RTL-Quellcode auf herkömmlichen Weg mit einem Synthesewerkzeug Konfigurationsdaten erzeugen, so würden diese Konfigurationsdaten die Abarbeitung der logischen Operationen in dem betreffenden Logikelement innerhalb eines Takts bewirken. Allerdings erhält das Register dieses Logikelements dann nach einem Takt einen falschen Wert, weil es eben den korrekten Wert erst in einem oder mehreren weiteren Takten erwartet. Somit arbeitet dieses Logikelement nicht korrekt und das FPGA arbeitet nicht wie gewünscht. Also ohne Kenntnis der originalen Konfigurationsdatei, enthaltend die physikalischen Laufzeiten zwischen zwei Registern, werden zwar alle Register neu platziert, jedoch ist das Ergebnis der verarbeiteten Daten inkorrekt.

Die Verlängerung der Laufzeit für ein bestimmtes Logikelement des FPGAs kann dadurch erzielt werden, dass die Logikschaltung von dem zumindest einen Logikelement in hintereinander zu durchlaufende Teilschaltungen unterteilt wird und die Teilschaltungen an voneinander entfernten, durch das Gitter verbundenen Orten platziert werden, sodass im Betrieb des FPGAs der Signalpfad durch die Teilschaltungen eine Laufzeit ergibt, die länger als ein Takt des FPGAs ist.

Da das Synthesewerkzeug in der Regel für ein Logikelement nur Logikoperationen innerhalb eines Taktes zulässt und eine Fehlermeldung ausgibt, wenn die Logikoperationen mehr Zeit benötigen, muss in diesem Fall dem Synthesewerkzeug mit der Synthese-Bedingung auch mitgeteilt werden, dass für ein oder mehrere bestimmte Logikelemente eine Zeitüberschreitung zulässig ist, und auch in welchem Ausmaß. Insofern kann vorgesehen sein, dass die Laufzeit für den Signalpfad für ein oder mehrere bestimmte Logikelemente nicht länger als ein vorgegebenes Vielfaches eines Takts des FPGAs ist.

In der Regel wird die Laufzeit eines bestimmten Logikelements festgelegt durch die Zeit, die ein Signal von einem Register, das unmittelbar vor dem Logikelement angeordnet ist, bis zum Register des Logikelements benötigt. "Unmittelbar vor dem Logikelement" bedeutet hier, dass sich kein weiteres Register dazwischen befindet, aber sehr wohl Abzweigungen im Gitter des FPGAs oder Ähnliches dazwischen sein können.

Für den Erfolg des erfindungsgemäßen Verfahrens, dass nämlich das FPGA mit einer unautorisiert aus dem RTL-Quellcode erzeugten Konfigurationsdatei nicht funktioniert, ist es oft ausreichend, wenn nur für einige wenige, ja sogar nur für ein Logikelement der Signalpfad erfindungsgemäß verlängert wird. Der Hersteller des FPGAs kennt dieses oder diese Logikelemente, die eine zentrale und wichtige Funktion innerhalb des FPGAs haben. Insofern kann vorgesehen sein, dass die Auswahl zumindest eines betroffenen Logikelements auf Basis seiner Funktion im FPGA erfolgt.

Möglicher Weise weniger erfolgreich ist jene Ausführungsvariante der Erfindung, wonach die Auswahl zumindest eines betroffenen Logikelements zufällig erfolgt. Dafür könnte die Auswahl durch einen Algorithmus erfolgen, sodass kein menschliches Fachwissen über das FPGA selbst erforderlich ist. Wenn dieses oder diese zufällig ausgewählten Logikelemente keine zentrale Funktion haben, kann das FPGA möglicherweise aber trotzdem betrieben werden, auch wenn die Konfigurationsdaten nicht autorisiert hergestellt wurden. Bei der zufälligen Auswahl kann dieser Nachteil durch die Auswahl vieler Logikelemente verringert werden, weil sich dadurch die Wahrscheinlichkeit erhöht, zentrale und wichtige Logikelemente zu treffen.

Es können auch ein oder mehrere Logikelemente gezielt und ein oder mehrere Logikelemente zufällig ausgewählt werden.

Da das erfindungsgemäße Verfahren in der Regel durch einen Computer ausgeführt wird, umfasst die gegenständliche Erfindung auch ein Computerprogrammprodukt, welches ein Programm umfasst, das direkt in einen Prozessor eines Synthesewerkzeugs ladbar ist, mit Programm-Mitteln, um alle Schritte des erfindungsgemäßen Verfahrens auszuführen, wenn das Programm vom Prozessor ausgeführt wird. Das Computerprogrammprodukt kann beispielsweise ein Datenträger sein, auf welchem ein entsprechendes Computerprogramm gespeichert ist, oder es kann ein Signal- oder Datenstrom sein, der über eine Datenverbindung in den Prozessor eines Synthesewerkzeugs geladen werden kann.

Das erfindungsgemäße Verfahren bietet zwar keinen Schutz, die einmal mit diesem Verfahren hergestellte Konfigurationsdatei (enthaltend die erfindungsgemäßen Laufzeitverlängerungen) unautorisiert zu kopieren und unautorisiert und wirksam auf den FPGA anzuwenden. Das erfindungsgemäße Verfahren verhindert aber, dass jemand eine Konfigurationsdatei auf das FPGA anwendet, welche auf herkömmliche Weise aus dem unrechtmäßig erworbenen RTL-Quellcode generiert worden ist. Es wird also verhindert, dass aus dem RTL-Quellcode eine funktionierende Konfigurationsdatei, insbesondere auch eine durch einen Angreifer geänderte Konfigurationsdatei, hergestellt wird.

Die Erfindung umfasst auch ein FPGA, welches aus vielen Logikelementen besteht, die über ein Gitter miteinander verbunden sind, wobei ein Logikelement jeweils eine Logikschaltung und ein Register enthält, und welches durch ein erfindungsgemäßes Verfahren hergestellt ist.

### Kurzbeschreibung der Figuren

Zur weiteren Erläuterung der Erfindung wird im nachfolgenden Teil der Beschreibung auf die Figuren Bezug genommen, aus denen weitere vorteilhafte Ausgestaltungen, Einzelheiten und Weiterbildungen der Erfindung zu entnehmen sind. Die Figuren sind beispielhaft zu verstehen und sollen den Erfindungscharakter zwar darlegen, ihn aber keinesfalls einengen oder gar abschließend wiedergeben. Es zeigt
- Fig. 1: ein Logikelement nach dem Stand der Technik, mit vorangehendem Register,
- Fig. 2: ein erfindungsgemäßes Logikelement, bestehend aus mehreren Teilschaltungen, mit vorangehendem Register.

### Ausführung der Erfindung

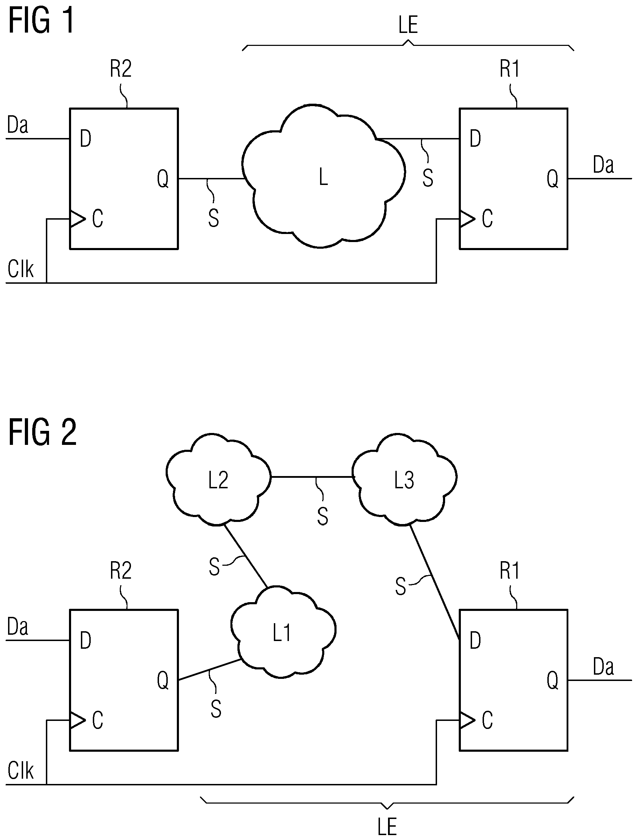

Fig. 1 zeigt schematisch eines der vielen Logikelemente LE eines FPGAs. Dieses besteht aus einer Logikschaltung L und einem Register R1, das hier als Flipflop ausgebildet ist. Das links dargestellte Register R2, ebenfalls ein Flipflop, gehört zum benachbarten, insbesondere vorhergehenden, Logikelement. Jedes Register R1, R2 wird über den Eingang C von einem gemeinsamen Taktsignal Clk versorgt. Die zu verarbeitenden Daten Da werden dem Register R1, R2 über einen Dateneingang D zugeführt. Daten Da werden aus dem Register R1, R2 über einen Ausgang Q an die Logikschaltung L des nächsten Logikelements LE weitergeleitet.

Die Logikschaltung L ist räumlich zwischen den beiden Registern R1, R2 angeordnet, weil damit der Signalpfad S, der von einem Register R2 über die Logikschaltung L zum nächsten Register R1 führt, am kürzesten ist und innerhalb eines Taktes (auch Zyklus genannt) des Taktsignals Clk die Daten des Registers R2 in der Logikschaltung L bearbeitet und an das Register R1 weitergeleitet werden können.

Liegt keine Spannung am FPGA an, so sind die Zustände der Register R1, R2 nicht definiert und die Logikschaltung L sowie die Verbindungen zwischen dem Logikelement LE zu den anderen (nicht dargestellten) Logikelementen nicht konfiguriert. Wenn die Versorgungsspannung an das FPGA angelegt wird, so werden zuerst die Konfigurationsdaten aus einer Konfigurationsdatei geladen und die Zustände der Register R1, R2, festgelegt sowie die Logikschaltungen und die Verbindungen zwischen dem Logikelement LE zu den anderen Logikelementen konfiguriert. Die Konfigurationsdatei ist zuvor mit einem Synthesewerkzeug aus einem RTL-Quellcode erstellt worden. So könnte der RTL-Quellcode enthalten, dass das dargestellte Logikelement LE eine Division durchführen soll. Das Synthesewerkzeug legt dann fest, wie die Logikschaltung L des Logikelements LE konkret konfiguriert werden soll, damit die Funktion der Division erfüllt wird. Dabei sorgt das Synthesewerkzeug dafür, dass die Laufzeit für den Signalpfad S nicht länger als ein Takt des Taktsignals Clk ist.

Fig. 2 zeigt schematisch ein erfindungsgemäßes Logikelement LE eines FPGAs, wobei die Logikschaltung L aus Fig. 1 nun aus drei Teilschaltungen L1, L2, L3 besteht, von denen zwei Teilschaltungen L2, L3 räumlich von der direkten Verbindung zwischen Register R1 und Register R2 entfernt sind. Bei der Synthese der Konfigurationsdatei wird nicht nur durch den RTL-Quellcode vorgegeben, welche Funktion (z.B. Division) das Logikelement LE in seiner Logikschaltung übernehmen soll, sondern auch - durch einen Befehl aus einer Datenquelle, die nicht der RTL-Quellcode ist (Synthese Constraint) -, dass die Laufzeit für den Signalpfad S, also für den Weg eines Datensignals vom Ausgang Q des Registers R2 zum Eingang D des Registers R1, länger als ein Takt sein soll, z.B. drei Takte. Gleichzeitig sorgt das Synthesewerkzeug dafür, dass das Register R1 weiß, dass die korrekten Daten erst nach drei Takten, und nicht bereits nach einem Takt, am Eingang D anliegen. Diese Laufzeitverlängerung für das Register R1 wird ebenfalls in der Konfigurationsdatei abgespeichert. Das Synthesewerkzeug, in der Regel ein Computerprogramm, konfiguriert nun den Signalpfad S für das konkrete Logikelement LE so, dass dessen physische Länge - unter Berücksichtigung der Bearbeitungszeiten für die darin liegenden Logikschaltungen - drei Takten entspricht. Dazu wird das als Bussystem ausgebildete Gitter des FPGA verwendet, das alle physischen Logikblöcke, die in der Regel jeweils ein Logikelement LE enthalten, miteinander verbinden kann, wenn die entsprechenden Verbindungen konfiguriert werden.

Wie im Beispiel der Fig. 2 dargestellt, wird die Logikoperation auf drei Teilschaltungen L1, L2, L3 aufgeteilt. Der Signalpfad S führt vom Ausgang Q des Registers R2 zu einer ersten Teilschaltung L1, die räumlich zwischen den Registern R1, R2 angeordnet ist, also beispielsweise in dem physischen Logikblock, der sich physisch zwischen den Registern R1, R2, befindet. Das Ergebnis der ersten Teilschaltung L1 wird über das Gitter des FPGAs einer zweiten Teilschaltung L2 zugeführt, die sich in einem anderen physischen Logikblock des FPGAs befindet, z.B. einem benachbarten Logikblock, oder noch weiter entfernt. Die zweite Teilschaltung L2 führt wieder einen Teil der Logikoperation aus und leitet ihr Ergebnis über das Gitter an eine dritte Teilschaltung L3 weiter, die schließlich die Logikoperation abschließt und das Endergebnis über das Gitter dem Register R1 zuführt. Auch die dritte Teilschaltung L3 ist von der ersten Teilschaltung L1 und von der zweiten Teilschaltung L2 räumlich entfernt und z.B. in wieder einem anderen physischen Logikblock des FPGAs untergebracht.

Wird nun die erfindungsgemäße erstellte Konfigurationsdatei in den FPGA geladen und das FPGA in Betrieb genommen, so beträgt die Laufzeit des Datensignals durch den Signalpfad S der Logikschaltung des Logikelements LE in diesem Beispiel drei Zyklen, das Register R1 reicht die korrekten Daten Da erst nach drei Zyklen, also nach drei Clock Impulsen, weiter.

Würde sich ein Angreifer unautorisiert den RTL-Quellcode beschaffen und mit einem Synthesewerkzeug daraus eine Konfigurationsdatei erstellen, würde das Synthesewerkzeug, weil ja kein Befehl über die Verlängerung der Laufzeit für ein oder mehrere bestimmte Logikelemente LE vorliegt, wohl eine Konfiguration gemäß Fig. 1 vornehmen, wo der Signalpfad S nur einen Takt benötigt. Damit liegt am Register R1 nach einem Takt ein falsches Signal an, was wiederum zu einem falschen Ergebnis in der gesamten Berechnung führt.

### Bezugszeichenliste:

- C: Takteingang
- Clk: Taktsignal
- L: Logikschaltung
- L1: erste Teilschaltung
- L2: zweite Teilschaltung
- L3: dritte Teilschaltung
- LE: Logikelement
- D: Dateneingang
- Da: Daten
- Q: Ausgang
- R1: Register des Logikelements LE
- R2: Register
- S: Signalpfad

## Patentansprüche

1. Verfahren zum Schutz eines FPGAs vor einer unautorisierten Anwendung des RTL-Quellcodes,
wobei das FPGA aus vielen Logikelementen (LE) besteht, die über ein Gitter miteinander verbindbar sind,
wobei ein Logikelement (LE) jeweils eine Logikschaltung (L; L1,L2,L3) und ein Register (R1) enthält,
wobei durch ein Synthesewerkzeug aus dem RTL-Quellcode die Konfigurationsdaten erzeugt werden, welche beim Einschalten der Versorgungsspannung des FPGAs in die Logikschaltungen (L; L1,L2,L3) und die Register (R1,R2) geladen werden, **dadurch gekennzeichnet, dass** zumindest ein Logikelement (LE) ausgewählt wird;
dass dem Synthesewerkzeug bei der Erzeugung der Konfigurationsdaten neben dem RTL-Quellcode ein Befehl, in Form einer Synthese-Bedingung, zugeführt wird; und dass durch das Synthesewerkzeug mit dem Befehl zumindest ein Signalpfad (S) für das zumindest eine ausgewählte Logikelement (LE) so festgelegt wird, dass sich im Betrieb des FPGAs auf diesem Signalpfad eine Laufzeit ergibt, die länger als ein Takt des FPGA ist, wobei der besagte Befehl auch angibt, in welchem Ausmaß eine Zeitüberschreitung zulässig ist.

2. Verfahren nach Anspruch 1, **dadurch gekennzeichnet, dass** die Logikschaltung von dem zumindest einen Logikelement (LE) in hintereinander zu durchlaufende Teilschaltungen (L1,L2,L3) unterteilt wird und die Teilschaltungen an voneinander entfernten, durch das Gitter verbundenen Orten platziert werden, sodass im Betrieb des FPGAs der Signalpfad (S) durch die Teilschaltungen (L1,L2,L3) eine Laufzeit ergibt, die länger als ein Takt des FPGAs ist.

3. Verfahren nach Anspruch 1 oder 2, **dadurch gekennzeichnet, dass** die Laufzeit für den Signalpfad (S) nicht länger als ein vorgegebenes Vielfaches eines Takts des FPGAs ist.

4. Verfahren nach einem der vorhergehenden Ansprüche, **dadurch gekennzeichnet, dass** die Laufzeit festgelegt ist durch die Zeit, die ein Signal von einem Register (R2), das unmittelbar vor dem Logikelement (LE) angeordnet ist, bis zum Register (R1) des Logikelements (LE) benötigt.

5. Verfahren nach einem der vorhergehenden Ansprüche, **dadurch gekennzeichnet, dass** die Auswahl zumindest eines betroffenen Logikelements (LE) auf Basis seiner Funktion im FPGA erfolgt.

6. Verfahren nach einem der vorhergehenden Ansprüche, **dadurch gekennzeichnet, dass** die Auswahl zumindest eines betroffenen Logikelements (LE) zufällig erfolgt.

7. Computerprogrammprodukt, welches ein Programm umfasst, das direkt in einen Prozessor eines Synthesewerkzeugs ladbar ist, mit Programm-Mitteln, um alle Schritte des Verfahrens nach einem der Ansprüche 1 bis 6 auszuführen, wenn das Programm vom Prozessor ausgeführt wird.

8. FPGA, welches aus vielen Logikelementen besteht, die über ein Gitter miteinander verbunden sind, wobei ein Logikelement jeweils eine Logikschaltung und ein Register enthält, und welches durch ein Verfahren nach einem der Ansprüche 1 bis 6 hergestellt ist.

## Claims

1. Method for protecting an FPGA against an unauthorised use of the RTL source code,
wherein the FPGA consists of many logic elements (LE), which are able to be interconnected via a grid,
wherein a logic element (LE) contains one logic circuit (L; L1,L2,L3) and one register (R1) in each case, wherein, by way of a synthesis tool from the RTL source code, the configuration data is generated, which is loaded when connecting the supply voltage of the FPGA to the logic circuits (L; L1,L2,L3) and the registers (R1,R2),
**characterised in that**
at least one logic element (LE) is selected;
that a command, in the form of a synthesis condition, is supplied to the synthesis tool in addition to the RTL source code when generating the configuration data; and that, by way of the synthesis tool, the command defines at least one signal path (S) for the at least one selected logic element (LE), such that during operation of the FPGA on this signal path, a transit time arises which is longer than a clock cycle of the FPGA, wherein said command also specifies the extent to which an overrun is permissible.

2. Method according to claim 1, **characterised in that** the logic circuit is subdivided by the at least one logic element (LE) into subcircuits (L1,L2,L3) which are to run in succession, and the subcircuits are placed at sites which are remote from one another and connected by the grid, so that during operation of the FPGA, the signal path (S) through the subcircuits (L1,L2,L3) results in a transit time which is longer than a clock cycle of the FPGA.

3. Method according to claim 1 or 2, **characterised in that** the transit time for the signal path (S) is not longer than a predetermined multiple of a clock cycle of the FPGA.

4. Method according to one of the preceding claims, **characterised in that** the transit time is specified by the time which a signal needs from a register (R2), which is arranged immediately upstream of the logic element (LE), up to the register (R1) of the logic element (LE).

5. Method according to one of the preceding claims, **characterised in that** the selection of at least one logic element (LE) in question takes place on the basis of its function in the FPGA.

6. Method according to one of the preceding claims, **characterised in that** the selection of at least one logic element (LE) in question takes place randomly.

7. Computer program product, which comprises a program, which is able to be loaded directly into a processor of a synthesis tool, with program means for executing all steps of the method according to one of claims 1 to 6, when the program is executed by the processor.

8. FPGA, which consists of many logic elements, which are interconnected via a grid, wherein a logic element contains one logic circuit and one register in each case, and which is manufactured by a method according to one of claims 1 to 6.

## Revendications

1. Procédé de protection d'un FPGA contre une utilisation non autorisée du code source RTL, le FPGA étant composé d'une pluralité d'éléments logiques (LE) qui peuvent être reliés entre eux par une grille, un élément logique (LE) contenant respectivement un circuit logique (L ; L1,L2,L3) et un registre (R1), les données de configuration qui sont chargées dans les circuits logiques (L ; L1,L2,L3) et les registres (R1, R2) lors de l'enclenchement de la tension d'alimentation du FPGA étant générées par un outil de synthèse à partir du code source RTL, **caractérisé en ce qu'**au moins un élément logique (LE) est sélectionné, **en ce qu'**est amené à l'outil de synthèse, outre le code source RTL, lors de la génération des données de configuration, un ordre sous la forme d'une condition de synthèse, et **en ce qu'**est déterminé de manière telle par l'outil de synthèse, avec l'ordre, au moins un chemin de signaux (S) pour l'au moins un élément logique sélectionné (LE) qu'on a, pendant le fonctionnement du FPGA, sur ce chemin de signaux, un temps de parcours qui est supérieur à une horloge du FPGA, ledit ordre indiquant également dans quelle mesure un dépassement du temps est autorisé.

2. Procédé selon la revendication 1, **caractérisé en ce que** le circuit logique est subdivisé par l'au moins un élément logique (LE) en sous-circuits (L1,L2,L3) à parcourir successivement et **en ce que** les sous-circuits sont placés à des endroits distants l'un de l'autre et reliés par la grille, de sorte que le chemin de signaux (S) passant par les sous-circuits (L1,L2,L3) donne, pendant le fonctionnement du FPGA.

3. Procédé selon la revendication 1 ou 2, **caractérisé en ce que** le temps de parcours pour le chemin de signaux (S) n'est pas supérieur à un multiple donné d'une horloge du FPGA.

4. Procédé selon l'une des revendications précédentes, **caractérisé en ce que** le temps de parcours est déterminé par le temps requis par un signal pour aller d'un registre (R2) situé directement en amont de l'élément logique (LE) jusqu'au registre (R1) de l'élément logique (LE).

5. Procédé selon l'une des revendications précédentes, **caractérisé en ce que** la sélection d'au moins un élément logique concerné (LE) se fait sur la base de sa fonction dans le FPGA.

6. Procédé selon l'une des revendications précédentes, **caractérisé en ce que** la sélection d'au moins un élément logique concerné (LE) se fait aléatoirement.

7. Produit de programme informatique qui comprend un programme qui peut être chargé directement dans un processeur d'un outil de synthèse, comportant des moyens de programme pour exécuter toutes les étapes du procédé selon l'une des revendications 1 à 6 lorsque le programme est exécuté par le processeur.

8. FPGA composé d'une pluralité d'éléments logiques qui sont reliés entre eux par une grille, un élément logique contenant respectivement un circuit logique et un registre, et qui est réalisé par un procédé selon l'une des revendications 1 à 6.
